# EUROPEAN PATENT SPECIFICATION

(11) **EP 4 221 122 B1**
(45) Date of publication and mention of the grant of the patent: **23.10.2024**
(21) Application number: 22153864.8
(22) Date of filing: 28.01.2022
(51) Int. Cl.: H04L 41/0813, H04L 45/302, H04M 15/00

(54) **METHOD FOR REQUESTING AND/OR TRANSMITTING A USER EQUIPMENT ROUTE SELECTION POLICY INFORMATION WHEN OPERATING A USER EQUIPMENT CONNECTED TO A TELECOMMUNICATIONS NETWORK, USER EQUIPMENT, SYSTEM AND COMPUTER READABLE MEDIUM**
VERFAHREN ZUR ANFORDERUNG UND/ODER ÜBERTRAGUNG VON RICHTLINIENINFORMATIONEN ÜBER DIE ROUTENWAHL EINER BENUTZERVORRICHTUNG BEIM BETRIEB EINER AN EIN TELEKOMMUNIKATIONSNETZ ANGESCHLOSSENEN BENUTZERVORRICHTUNG, BENUTZERVORRICHTUNG, SYSTEM UND COMPUTERLESBARES MEDIUM
PROCÉDÉ DE DEMANDE ET/OU DE TRANSMISSION D'INFORMATIONS SUR LA POLITIQUE DE SÉLECTION D'ITINÉRAIRE D'UN ÉQUIPEMENT D'UTILISATEUR LORS DU FONCTIONNEMENT D'UN ÉQUIPEMENT D'UTILISATEUR CONNECTÉ À UN RÉSEAU DE TÉLÉCOMMUNICATIONS, ÉQUIPEMENT D'UTILISATEUR, SYSTÈME ET SUPPORT LISIBLE PAR ORDINATEUR

(43) Date of publication of application: 02.08.2023
(73) Proprietor: Deutsche Telekom AG, 53113 Bonn (DE)
(72) Inventor: COLOM IKUNO, Josep, 2100 Korneuburg (AT); LAUSTER, Reinhard, 3100 St. Pölten (AT)
(74) Representative: Schwöbel, Thilo K.

(56) References cited:
- WO-A1-2019/227313
- XIAOMI ET AL: "V2X Policy Control", vol. SA WG2, no. Electronic, Elbonia; 20200819 - 20200901, 26 August 2020 (2020-08-26), XP051928736, Retrieved from the Internet <URL:https://ftp.3gpp.org/tsg_sa/WG2_Arch/TSGS2_140e_Electronic/Docs/S2-2006200.zip> [retrieved on 20200826]
- APPLE ET AL: "Deprecating OS Id and OS App Id from URSP and ATSSS rules", vol. SA WG2, no. Incheon, South Korea; 20200113 - 20200117, 7 January 2020 (2020-01-07), XP051842969, Retrieved from the Internet <URL:https://ftp.3gpp.org/tsg_sa/WG2_Arch/TSGS2_136AH_Incheon/Docs/S2-2000916.zip> [retrieved on 20200107]
- ERICSSON ET AL: "UE policies granularity and UE assistance for policy evaluation", vol. SA WG2, no. Montreal, Canada; 20180226 - 20180302, 5 March 2018 (2018-03-05), XP051408889, Retrieved from the Internet <URL:http://www.3gpp.org/ftp/tsg%5Fsa/WG2%5FArch/TSGS2%5F126%5FMontreal/Docs/> [retrieved on 20180305]

## Description

### BACKGROUND

The present invention relates a method for requesting and/or transmitting a user equipment route selection policy information when operating a user equipment connected to a telecommunications network, wherein the telecommunications network comprises a core network comprising a policy and charging function, wherein the policy and charging function is configured to transmit user equipment route selection policy information to the user equipment.

Furthermore, the present invention relates to a user equipment for requesting and/or receiving a user equipment route selection policy information when being operated in connection to a telecommunications network, wherein the user equipment is configured to receive user equipment route selection policy information from a policy and charging function of the telecommunications network.

Additionally, the present invention relates to a system for requesting and/or transmitting a user equipment route selection policy information when operating the system with a connected user equipment, wherein the telecommunications network comprises a core network comprising a policy and charging function, wherein the policy and charging function is configured to transmit user equipment route selection policy information to the user equipment.

Furthermore, the present invention relates to a program and to a computer-readable medium for requesting and/or transmitting a user equipment route selection policy information according to the inventive method.

In conventionally known telecommunications networks, in case that uplink traffic needs to be steered, a 5G mobile communication network or 5G system also defines user equipment route selection policies (or UE Routing Policies, URSPs), defined in TS 24.526, that allow the network to mandate the user equipment a set of rules on how to route data packets, i.e., based on a set of rules, such rules indicate or mandate the user equipment to steer specific traffic to a given PDU (protocol data unit) session.

However, in case of a change of the connection conditions, changes occurred at higher layer, e.g. application layer, and/or of the operation situation of the user equipment, e.g. switch of operating mode, the previously provided network-mandated rules on how to route data packets or how to steer specific traffic to a given PDU (protocol data unit) session might become inappropriate, inapplicable and/or at least not adapted to the respective situation.

APPLE ET AL: "Deprecating OS Id and OS App Id from URSP and ATSSS rules",3GPP DRAFT; S2-2000916, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,vol. SA WG2, no. Incheon, South Korea; 20200113 - 20200117 7 January 2020 (2020-01-07), relates to policy distribution to UE in a 5g system.

WO 2019/227313 A1 (NOKIA SHANGHAI BELL CO LTD [CN] ET AL.) 5 December 2019 (2019-12-05) relates to policy distribution.

ERICSSON ET AL: "UE policies granularity and UE assistance for policy evaluation",3GPP DRAFT; S2-183005_WAS2605_WAS1612_WAS AGREED S2-181399_UE POLICIES GRANUALITY, 3RD GENERATION PARTNERSHIP PROJECT (3GPP), MOBILE COMPETENCE CENTRE ; 650, ROUTE DES LUCIOLES ; F-06921 SOPHIA-ANTIPO,vol. SA WG2, no. Montreal, Canada; 20180226 - 20180302 5 March 2018 (2018-03-05) relates to policy distribution to UE in a 5g system.

XIAOMI ET AL: "V2X Policy Control",3GPP DRAFT; S2-2006200, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,vol. SA WG2, no. Electronic, Elbonia; 20200819 - 20200901 26 August 2020 (2020-08-26) relates to V2X Policy provisioning and updating.

### SUMMARY

An object of the present invention is to provide a technically simple, effective and cost effective solution for requesting and/or transmitting a user equipment route selection policy information when operating a user equipment connected to a telecommunications network, wherein the telecommunications network comprises a core network comprising a policy and charging function, wherein the policy and charging function is configured to transmit user equipment route selection policy information to the user equipment, wherein a user equipment route selection policy information or update is able to be requested and/or transmitted in case of a change of the connection conditions and/or of the operation situation of the user equipment and detected or determined by the user equipment. A further object of the present invention is to provide a corresponding user equipment, system and a corresponding program and computer-readable medium.

The invention is defined by the independent claims. Further embodiments of the invention are defined by the dependent claims. Although the invention is only defined by the claims, the below embodiments, examples and aspects are present

for aiding in understanding the background and advantages of the invention. It is thereby advantageously possible according to the present invention that a user equipment is able to trigger to notify towards a corresponding telecommunications network, especially a corresponding core network (especially the core network of the home public land mobile network), that, e.g., a network change happened so that the corresponding telecommunications network (corresponding core network), especially the home network (especially the home public land mobile network), triggers the setting of corresponding user equipment route selection policy information, especially user equipment route selection policy rules that correspond to or are appropriate or adapted to the current situation of the user equipment.

Hence, it is especially advantageously possible, according to the present invention, that it is the user equipment, especially in case of a change of the connection conditions and/or of the operation situation of the user equipment (and especially detected or determined by the user equipment), that triggers an update of the user equipment route selection policy rules to apply.
Hence, especially potential conflict situations or situations of inefficiency between, on the one hand, user equipment route selection policy information (i.e. user equipment route selection policy rules) stored by the user equipment or (previously) received by the user equipment, and, on the other hand, current connection conditions and/or the current operation situation of the user equipment can either be avoided or at least reduced, especially regarding the time or duration during which such a conflict or inefficiency between the user equipment route selection policy rules mandated by the respective telecommunications network, and the current connection conditions and/or the operating situation persists.

One example of such potential conflicts might relate to standalone non-public networks: With the introduction, as of 3GPP Rel'16, of standalone non-public networks (SNPNs) which are private, 5G-based networks, a standalone non-public network access mode has been introduced, in addition to the normal access mode. A standalone non-public network-enabled user equipment typically supports the standalone non-public network access mode; when the user equipment is set to operate in SNPN-access mode, the user equipment might, e.g., exclusively select and register with standalone non-public networks. This might result in such user equipments being able to switch between two operating modes: An operating mode corresponding, on the one hand, to the standalone non-public network access mode and, on the other hand, the normal access mode (in which case the user equipment is typically allowed to access only public land mobile networks). Depending on the specific situation of a user equipment, conflicts might arise between a user equipment route selection policy rule, e.g. provided by its home public land mobile network, and the user equipment being connected to a standalone non-public network, or vice versa.
Thus, in currently known telecommunications networks (i.e. according to the presently defined standards or standard documents regarding such networks), it is allowed that credentials of a public land mobile network (PLMN credentials) are used for accessing standalone non-public networks; in this case, there might be a potential mismatch between such user equipment route selection policy rules (or user equipment route selection policy information) - that are set by the public land mobile network - and their application in a standalone non-public network setting (i.e. the situation where that same user equipment is connected to a standalone non-public network) and/or vice-versa: Such potential conflicts may, e.g., arise from the non-specificity of the application of user equipment route selection policy information (e.g. user equipment route selection policy information provided by the standalone non-public network override user equipment route selection policy information provided by the public land mobile network, or vice versa).

According to the present invention, by means of the user equipment transmitting the user equipment route selection policy update request message to the telecommunications network, and by means of in response the user equipment receiving (from the telecommunications network, typically from a corresponding core network, either the core network of the telecommunications network to which the user equipment is (directly) connected or the core network of another telecommunications network, especially the home network, especially the home public land mobile network) a user equipment route selection policy information that corresponds to the user equipment route selection policy update request message, it is advantageously possible to either avoid such mentioned conflict situations at all or at least to limit in time such conflict situations in a comparatively easy and efficient manner. Especially, this allows for a more flexible application of URSPs and user equipment route selection policy information in various telecommunications networks, and especially comprising standalone non-public networks and/or especially in case that PLMN credentials are used for accessing standalone non-public networks.

According to the present invention, i.e. according to all embodiments of the present invention, the user equipment especially does not request the user equipment route selection policy rule or user equipment route selection policy information by means of specifically referring to a "specific" (in the sense of already generated) user equipment route selection policy rule or user equipment route selection policy information (especially due to the fact that the user equipment or an application deployed on the user equipment does not actually know any such specific user equipment route selection policy rule or user equipment route selection policy information to refer to, i.e. which user equipment route selection policy to refer to, neither is a user equipment route selection policy rule currently referrable towards the network by means of an identifier), but the user equipment rather indicates (to the telecommunications network or the respective policy and charging function) - i.e. by means of specifying a "set of parameters used for the network to generate a fitting URSP" (or by means of simply requesting "an update of the user equipment route selection policies") - that certain changes occurred, and the telecommunications network or the respective policy and charging function then deploys (and, especially, previously generates) the user equipment route selection policy rules or user equipment route selection policy information or user equipment route selection policies if or as needed.

Furthermore according to the present invention, the telecommunications network typically comprises an access network and a core network; however, the present invention is also related to situations where the telecommunications network does not comprise, strictly speaking, both an access network and a core network, but where the telecommunications network is only associated or assigned to an access network (and especially comprises the core network), or where the telecommunications network is only associated or assigned to a core network (and especially comprise the access network), or where the telecommunications network is only associated or assigned to both an access network and a core network. According to the present invention, the core network especially provides the user equipment with data connectivity towards a data network.

In conventionally known telecommunications networks, a user equipment is typically able to be connected, via the core network, to a data network. The user equipment typically communicates with the access network (or radio access network) via an interface, typically a radio interface or air interface. This is used for conveying both signaling information and data traffic, but there is typically a logical separation (logical channels) for the transport of both types of traffic. Likewise, between the access network (especially the radio access network, and especially a gNB base station entity) and the core network, signaling information and user data are typically separated. In order to establish a data connection enabling a user equipment to communicate with a data network, a protocol data unit (PDU) session is required. A PDU session is a logical data transport channel terminated at the core network that provides connectivity to a data network. The termination point of a given PDU session (user plane function according to, e.g., the 5G standard) is termed PDU session anchor (PSA). While a user equipment moves (handover procedures occur between the user equipment and different gNBs or base station entities), the PDU session anchor is, normally and typically, expected to remain constant. A PDU session can have one or more an associated quality-of-service for the underlying transported data (e.g. one or more QoS flows within the PDU session).

In currently known telecommunications networks as well as according to the present invention, user equipment route selection policy information or user equipment route selection policy rules is/are used by the telecommunications network to oblige user equipments to use a set of rules to apply to, or steer, uplink traffic, i.e. how to route data packets. Especially such user equipment route selection policy rules indicate or mandate the user equipment to steer specific traffic to a given, or predetermined, PDU (protocol data unit) session. Especially such user equipment route selection policy rules or such user equipment route selection policy information is set or defined by the core network of the telecommunications network, i.e. the telecommunications network (core network thereof) sets a user equipment route selection policy rule or user equipment route selection policy information by means of transmitting a corresponding message to the user equipment as part of the control data flow exchange between the telecommunications network and the user equipment over the air interface between the user equipment and the corresponding access network element, typically a base station entity such as, e.g., a gNodeB entity. As a consequence of the user equipment receiving such a user equipment route selection policy rule (or plurality thereof) or user equipment route selection policy information, the user equipment will apply such rule information, i.e. traffic, especially application traffic (in uplink direction, towards the telecommunications network) that matches the corresponding user equipment route selection policy rule or user equipment route selection policy information is routed, by the user equipment, as mandated or prescribed by the user equipment route selection policy rule / information. In currently known telecommunications networks, the user equipment route selection policy rules or user equipment route selection policy information itself, i.e. especially its structure, is defined in 3GPP TS 23.503 and is a set of one or more URSP rules, where a URSP rule is generally composed of three parts, namely a precedence value as the first part, a traffic descriptor as the second part, and one or more route selection descriptors as the third part.
The precedence value (as the first part of a user equipment route selection policy rule) of the URSP rule identifies the precedence of the considered URSP rule among all the existing URSP rules (either already present at the user equipment or transmitted as part of the user equipment route selection policy information). The traffic descriptor (as the second part of a user equipment route selection policy rule) includes either a match-all traffic descriptor, or at least one of the following components: one or more application identifiers, one or more IP 3 tuples as defined in 3GPP TS 23.503, i.e. the destination IP address, the destination port number, and the protocol in use above the IP, one or more non-IP descriptors, i.e. destination information of non-IP traffic, one or more DNNs (data network name), one or more connection capabilities, one or more domain descriptors, i.e. destination FQDN(s) (fully qualified domain name(s)). Each route selection descriptor (as the third part of a user equipment route selection policy rule) consists of a precedence value of the route selection descriptor and either a non-seamless non-3GPP offload indication, or one PDU session type and, optionally, one or more of the following: SSC mode (session and service continuity mode), one or more S-NSSAIs (Single Network Slice Selection Assistance Information), one or more DNNs, a preferred access type, a multi-access preference, a time window, and location criteria.
In this context, the time window indication and the location criteria are part of the route selection descriptor (or third part of a user equipment route selection policy rule) even though they do not actually describe the traffic routing but, rather, correspond to route selection validation criteria: a given or considered route selection descriptor is not considered valid unless all the provided validation criteria are met and controls the validity of said element. The components describing the actual routing correspond to route selection components.
Regarding the application of user equipment route selection policy rules or user equipment route selection policy information, (specified in TS 23.503, 6.6.2.3), for every newly detected application (i.e. requiring an uplink data stream to be transmitted by the user equipment), the user equipment evaluates the available (i.e. stored or received) URSP rules in the order of rule precedence and determines if the application is matching the traffic descriptor of any URSP rule; when a URSP rule is determined to be applicable for a given application (clause 6.6.2.1), the user equipment shall select a route selection descriptor within this URSP rule in the order of the route selection descriptor precedence; if the user equipment determines that there is more than one matching and existing PDU Session (e.g. the selected route selection descriptor only specifies the network slice selection, while there are multiple existing PDU Sessions matching the network slice selection with different DNNs), it is up to user equipment implementation to select one of them to use.

According to the present invention, a user equipment is considered that is connected to a telecommunications network, and the telecommunications network comprises a core network that comprises a policy and charging function. The policy and charging function is configured to transmit user equipment route selection policy information to the user equipment.
Specifically according to the present invention, the user equipment is enabled to request user equipment route selection policy information from the telecommunications network (especially from its core network, and more specifically from its policy and charging function), such a request resulting in receiving, by the user equipment (and upon a transmission by the telecommunications network or its core network or its policy and charging function), user equipment route selection policy information. The request of the user equipment is especially transmitted to the telecommunications network in case of a change of the connection conditions and/or in case of the operation situation of the user equipment (especially detected or determined by the user equipment) being changed: in a first step, the user equipment transmits a user equipment route selection policy update request message to the telecommunications network, and in a second step, a user equipment route selection policy information that corresponds to the user equipment route selection policy update request message (and typically transmitted by the telecommunications network or its core network or its policy and charging function) is received by the user equipment.
Especially according to the present invention, a changed operation situation of the user equipment, e.g., corresponds to the user equipment being required to transmit data, especially user plane data, related to or regarding different applications, especially a software client application of the user equipment or executed by the user equipment.

According to the present invention, it is preferred that the user equipment comprises, for a given access technology (i.e. especially regarding each access technology for which standalone non-public networks might be accessible), an access mode configuration information. The access mode configuration information relates to or indicates a first network selection mode and at least a second network selection mode that the user equipment is alternatively able to use.
In this respect, especially the concept of user equipments being allowed to also access standalone non-public networks is relevant: These standalone non-public networks have the particularity that additional network identifiers are used; while for public land mobile networks, the PLMN ID (public land mobile network identifier, i.e. a combination of mobile country code (MCC) and the mobile network code (MNC)), is assumed to be unique, standalone non-public networks are designed with the assumption that the PLMN ID they use is not (necessarily) unique (e.g. a PLMN ID of "999 99" is or might be operatively used), and introduce an additional identifier, the network identifier (NID). As defined in 3GPP TS 23.501, the combination of a PLMN ID and a network identifier (NID) identifies a standalone non-public network, and the PLMN IDs reserved for use by private networks can be used for non-public networks (e.g. based on mobile country code (MCC) "999" as assigned by ITU). Alternatively however, a PLMN operator might use its PLMN IDs for SNPN(s) along with NID(s), but registration in a PLMN and mobility between a PLMN and an SNPN are not supported using an SNPN subscription, especially due to the SNPNs typically not relying on network functions provided by the PLMN.
Hence, in case a SNPN-enabled user equipment supports the SNPN access mode, when such a user equipment is set to operate in SNPN access mode, the user equipment only selects and registers with SNPNs (over Uu as described in clause 5.30.2.4). This results in such user equipments (i.e. supporting SNPNs) being able to switch between two operating modes, i.e. the first network selection mode and at least a second network selection mode, that the user equipment is alternatively able to use, e.g. SNPN access mode and the normal (or PLMN) access mode (more than two of such different access modes are possible according to the present invention and are not excluded). Hence, in such a scenario, depending on the type of network the user equipment wishes to access, this network selection mode (i.e. the access mode configuration information, or, rather, its content) can be switched.
It is preferred according to the present invention, that the user equipment route selection policy information comprises an access mode-related validity element that is related to the content of the access mode configuration information. Hence, in case of a user equipment route selection policy information being present (i.e. stored) at the user equipment (i.e. the user equipment comprises such a user equipment route selection policy information) or received by the considered user equipment, the user equipment route selection policy information is potentially applied, or not applied, by the user equipment, depending on whether the access mode-related validity element (of the user equipment route selection policy information) corresponds to the access mode configuration information or not, i.e. if it matches the content of the access mode configuration information.
Hence by means of the user equipment route selection policy information comprising the access mode-related validity element (that is related to the content of the access mode configuration information), and by means of the user equipment applying the user equipment route selection policy information, depending on the access mode-related validity element, it is advantageously possible to avoid potential conflict situations between, on the one hand, user equipment route selection policy information (without such access mode-related validity element), and, on the other hand, a current situation or context of the user equipment.
However, the user equipment first needs to receive such an appropriate user equipment route selection policy information (e.g. comprising the access mode-related validity element) before being able to appropriately implement or comply therewith. According to the present invention, it is advantageously possible for the user equipment to actively request to be provided with a new or an updated user equipment route selection policy rule or a plurality thereof, e.g. a user equipment route selection policy information.

According to the present invention, it is advantageously possible and preferred that the user equipment route selection policy information corresponding to the user equipment route selection policy update request message corresponds to setting and/or removing a user equipment route selection policy regarding the user equipment,
wherein in case of setting such a user equipment route selection policy regarding the user equipment, the corresponding user equipment route selection policy information is generated by a user equipment route selection policy generation function as part of or accessible by the telecommunications network, especially as part of or accessible by the policy and charging function thereof,
wherein especially the corresponding user equipment route selection policy information is generated by the user equipment route selection policy generation function in a manner dependent on the change of the connection conditions and/or of the operation situation of the user equipment and/or such that the user equipment route selection policy information fits to the current operation situation of the user equipment.

It is thereby advantageously possible to realize and implement the inventive method in a comparatively simple and efficient manner.

According to the present invention, it is furthermore advantageously possible and preferred that the user equipment route selection policy update request message corresponds to a control plane message, especially a non-access stratum message,
wherein especially by means of the user equipment route selection policy update request message the user equipment notifies the telecommunications network, especially the policy and charging function thereof, that a change of the connection conditions and/or of the operation situation occurred,
wherein especially the user equipment route selection policy update request message comprises an indication or an information relating to at least one of the following:
   -- a reason or at least one reason for the user equipment route selection policy update request message,
   -- a parameter or at least one parameter for the user equipment route selection policy update request message, especially a filtering parameter constraining the scope of the requested corresponding user equipment route selection policy information,
   -- a change of the telecommunications network the user equipment is attached to,
   -- a change of an access mode configuration information of the user equipment, the access mode configuration information relating to a configuration or an operational mode of the user equipment to be allowed to access either a predefined first set of telecommunications networks or a predefined second set of telecommunications networks,
   -- a change related to the use or functionality of a software client application executed by or of the user equipment, especially corresponding to an application-triggered user equipment route selection policy update request message.

It is thereby advantageously possible to realize and implement the inventive method in a comparatively simple and efficient manner.

According to the present invention, in a third step subsequent to the first step and prior to the second step,
-- the policy and charging function requests the user equipment to provide the currently used user equipment route selection policy information, and
-- the user equipment provides the currently used user equipment route selection policy information.

By means of the policy and charging function requesting the user equipment to provide the currently used user equipment route selection policy information, and the user equipment providing the currently used user equipment route selection policy information, it is advantageously possible according to the present invention that the policy and charging function is able to provide the user equipment route selection policy information (corresponding to the user equipment route selection policy update request message) in an efficient manner, especially tailored to the specific situation of the user equipment, and especially regarding such parts (or such rules) of the user equipment route selection policy information that the user equipment is lacking.

Furthermore, according to the present invention the application-triggered user equipment route selection policy update request message comprises at least one application-related parameter in the form of an application identifier information, and wherein, in a fourth step subsequent to the first step and prior to the third step,
-- the policy and charging function thereof, requests an application server entity to provide at least one further application-related parameter, and
-- the application server entity provides the at least one further application-related parameter,
wherein, in a fifth step subsequent to the third step and prior to the second step, the policy and charging function generates the user equipment route selection policy information that corresponds to the application-triggered user equipment route selection policy update request message.

It is thereby advantageously possible to realize and implement the inventive method in a comparatively simple and efficient manner also in case of an application-triggered user equipment route selection policy update request message.

Furthermore, it is advantageously possible and preferred according to the present invention that the user equipment route selection policy information corresponding to the user equipment route selection policy update request message comprises a corresponding access mode-related validity element,
wherein especially the corresponding user equipment route selection policy information comprises - besides a precedence value, a traffic descriptor and at least one route selection descriptor- the corresponding access mode-related validity element and/or
wherein especially the corresponding user equipment route selection policy information comprises the corresponding access mode-related validity element as part of at least one route selection descriptor.

It is thereby advantageously possible to realize and implement the inventive method in a comparatively simple and efficient manner.

According to a further preferred embodiment of the present invention, the user equipment route selection policy information corresponding to the user equipment route selection policy update request message comprises at least one user equipment route selection policy rule, wherein the corresponding access mode-related validity element is part of the user equipment route selection policy rule, especially as part of at least one route selection descriptor, and/or besides a precedence value, a traffic descriptor and at least one route selection descriptor.

It is thereby advantageously possible to realize and implement the inventive method in a comparatively simple and efficient manner.

Furthermore, the present invention relates to a system according to claim 6.

Additionally, the present invention relates to a program comprising a computer readable program code and/or a computer-readable medium comprising instructions, which, when executed on a computer and/or on a user equipment and/or on a network node of a telecommunications network, or in part on the user equipment and/or in part on the network node of a telecommunications network, causes the computer and/or the user equipment and/or the network node of a telecommunications network to perform the inventive method.

These and other characteristics, features and advantages of the present invention will become apparent from the following detailed description, taken in conjunction with the accompanying drawings, which illustrate, by way of example, the principles of the invention. The description is given for the sake of example only. The reference figures quoted below refer to the attached drawings.

### BRIEF DESCRIPTION OF THE DRAWINGS

Figure 1 schematically illustrates a telecommunications network comprising an access network, a core network and a user equipment, wherein the telecommunications network comprises a core network comprising a policy and charging function, wherein the policy and charging function is configured to transmit user equipment route selection policy information to the user equipment.
Figure 2 schematically illustrates the transmission of user equipment route selection policy information towards the user equipment.
Figure 3 schematically shows the user equipment requesting the transmission of user equipment route selection policy information by means of a user equipment route selection policy update request message to the telecommunications network.
Figure 4 schematically illustrates an embodiment of the user equipment requesting the transmission of user equipment route selection policy information by means of a user equipment route selection policy update request message to the telecommunications network.
Figure 5 schematically illustrates an embodiment of the structure of a user equipment route selection policy information according to the present invention.
Figure 6 schematically illustrates another embodiment of the structure of a user equipment route selection policy information according to the present invention.

### DETAILED DESCRIPTION

The present invention will be described with respect to particular embodiments and with reference to certain drawings. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

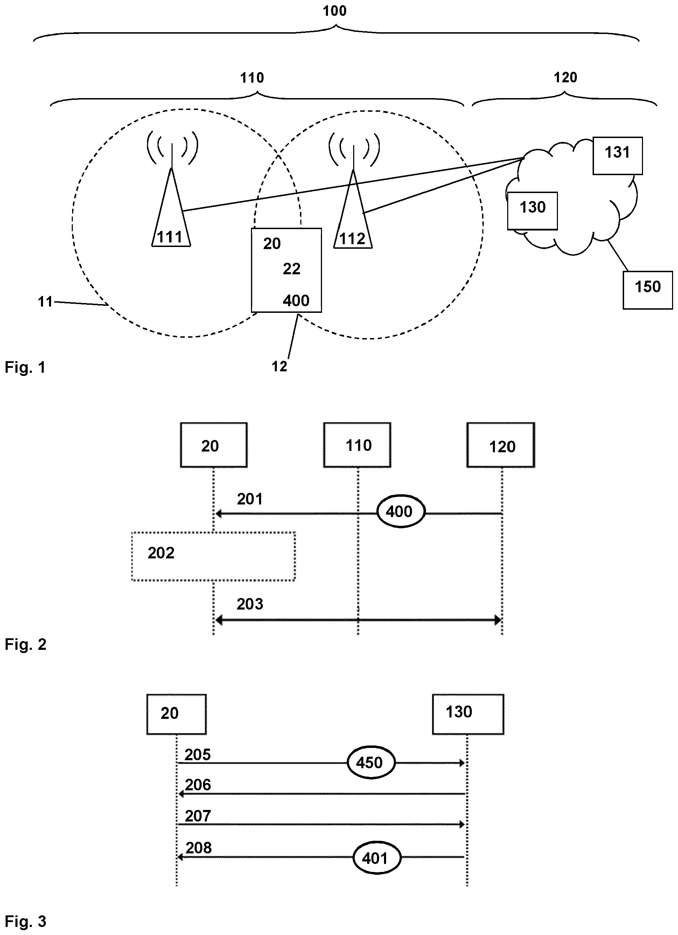

In Figure 1, a telecommunications network 100 comprising an access network 110, and a core network 120 is schematically shown. The telecommunications network 100, especially the core network 120, comprises a policy and charging function 130,
wherein the policy and charging function 130 is configured to transmit user equipment route selection policy information to the user equipment 20. The access network 110 comprises a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. A user equipment 20 comprises user equipment route selection policy information 400.
The user equipment 20 is typically, but not necessarily, mobile i.e. able to move with respect to the (typically, but not necessarily static) radio cells 11, 12 or corresponding base station entities 111, 112 of the access network 110. In the exemplarily represented illustration of Figure 1, the core network 120 comprises or is connected to a data network 131. The core network 120 provides the user equipment 20 with data connectivity towards the data network 131.
Furthermore, an application server 150 is at least accessible via the telecommunications network 100, and it is especially part of the telecommunications network 100 or of the core network 120 thereof.

According to the present invention, it is preferred that the user equipment 20 comprises, for a given access technology, an access mode configuration information 22 relating to or indicating a first network selection mode and at least a second network selection mode that the user equipment is alternatively able to use; however, such an access mode configuration information 22 is not mandatorily present or existent at the user equipment 20. Furthermore, it is preferred according to the present invention that the user equipment route selection policy information 400 comprises an access mode-related validity element.

In Figure 2, the transmission of user equipment route selection policy information 400 towards the user equipment 20 is schematically shown by means of a communication diagram between the user equipment 20, the access network 110, and the core network 120. According to the present invention, user equipment route selection policy information 400 is (or user equipment route selection policy rules 400 are) used by the telecommunications network 100 to oblige the user equipment 20 to use a set of rules to apply to, or steer, uplink traffic, i.e. how to route data packets are routed towards the core network 120 and/or towards a data network 131. Especially, such user equipment route selection policy information or rules 400 indicate or mandate the user equipment 20 to steer specific traffic to a given, or predetermined, PDU (protocol data unit) session. Especially such user equipment route selection policy rules or information 400 is set or defined by the core network 120 of the telecommunications network 100, i.e. the telecommunications network 100 (or the core network 120 thereof) sets the user equipment route selection policy rule or information 400 by means of transmitting (during or using a first processing step 201) a corresponding message to the user equipment 20, especially as part of the control data flow exchange between the telecommunications network 100 and the user equipment 20 over the air interface between the user equipment 20 and the corresponding access network element, typically a base station entity 111, 112 such as, e.g., a gNodeB entity. As a consequence of the user equipment 20 receiving the user equipment route selection policy rule (or plurality thereof) 400 or user equipment route selection policy information 400, the user equipment 20 applies such rule information (during a second processing step 202), i.e. traffic, especially application traffic (in uplink direction, towards the telecommunications network 100) that matches the corresponding user equipment route selection policy rule or information 400 is routed (in or during a third processing step 203), by the user equipment 20, as mandated or prescribed by this user equipment route selection policy rule / information 400.
However, as already said, in case of a change of the connection conditions and/or of the operation situation of the user equipment 20, the previously provided network-mandated rules on how to route data packets or how to steer specific traffic to a given PDU (protocol data unit) session might become inappropriate, inapplicable and/or at least not adapted to the respective situation of the user equipment 20.

Hence, according to the present invention, it is proposed to provide a method, user equipment, system such that the user equipment 20 is able to request this user equipment route selection policy information or to trigger to be provided with such (updated and/or appropriate and/or more suitable) user equipment route selection policy information. Hence, the present invention is related to requesting and/or transmitting user equipment route selection policy information when operating the user equipment 20 connected to the telecommunications network 100. Typically, the telecommunications network 100 comprises the core network 120, and the core network 120 the policy and charging function 130, wherein the policy and charging function 130 is configured to transmit user equipment route selection policy information to the user equipment 20 as this is shown in Figure 2.
However, according to the present invention, in order for the user equipment 20 to request (and/or for the telecommunications network 100 to transmit) such a user equipment route selection policy information (especially in case of a change of the connection conditions and/or of the operation situation of the user equipment 20, and especially detected or determined by the user equipment 20), it is proposed that, in a first step (of the inventive method), the user equipment 20 transmits a user equipment route selection policy update request message 450 to the telecommunications network 100, and, in a second step (of the inventive method), a user equipment route selection policy information 401, i.e. one that corresponds to the user equipment route selection policy update request message 450, is received by the user equipment 20 (because such user equipment route selection policy information 401 (i.e. that corresponds to the user equipment route selection policy update request message 450) having been transmitted by the telecommunications network 100, especially by the policy and charging function 130 of its core network 120).

It is especially preferred (but not necessarily the case) according to the present invention, that the user equipment route selection policy information 401 (i.e. that corresponds to the user equipment route selection policy update request message 450) itself, i.e. especially its structure, is defined in a manner different to its currently known definition in the current version of 3GPP TS 23.503, in that it also comprises, according to the present invention, an access mode-related validity element 441.

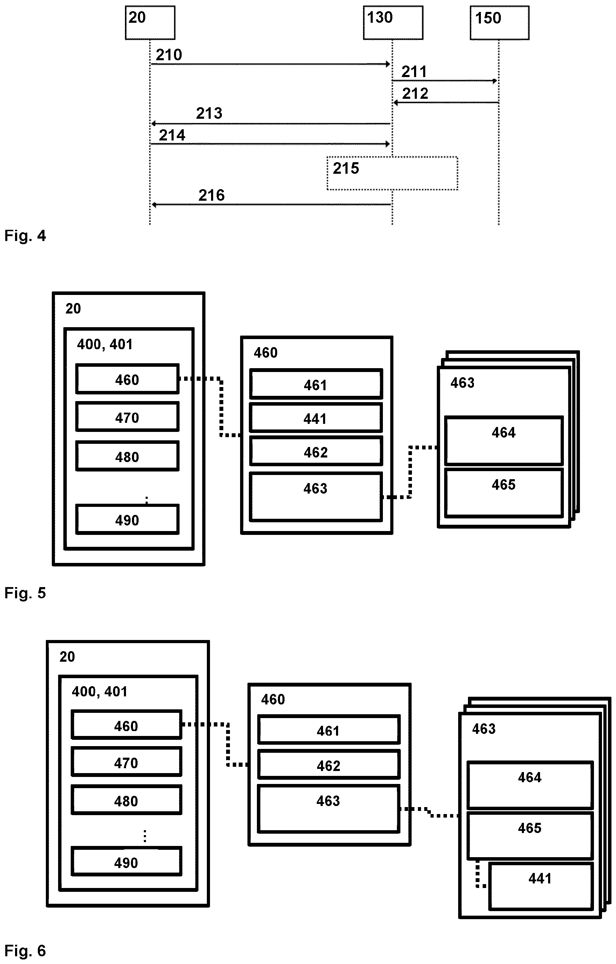

Figures 5 and 6 schematically show different embodiments of the structure of a user equipment route selection policy information 400, 401 according to the present invention, wherein the exemplary representation of Figures 5 and 6 shows the user equipment route selection policy information 400 to comprise a plurality of user equipment route selection policy rules 460, 470, 480, 490, and wherein, for the sake of simplicity, the structure of only one of these rules (namely user equipment route selection policy rule 460) is schematically shown; however, it is understood that the other user equipment route selection policy rules 470, 480, 490 are able to be similarly structured. According to one preferred embodiment of the present invention, shown in Figure 5, the access mode-related validity element 441 of the user equipment route selection policy rule 460 is a part thereof besides the precedence value 461, the traffic descriptor 462 and at least one route selection descriptor (list) 463, i.e. user equipment route selection policy rule 460 comprises the specific access mode-related validity element 441 besides a precedence value 461, a traffic descriptor 462 and at least one route selection descriptor (list) 463. The route selection descriptor (list) 463 furthermore comprises route selection components 464, and route selection validation criteria 465. According to another preferred embodiment of the present invention, shown in Figure 6, the access mode-related validity element 441 of the user equipment route selection policy rule 460 is a part of at least one route selection descriptor (list) 463, i.e. the user equipment route selection policy rule 460 comprises the specific access mode-related validity element 441 as part of the at least one route selection descriptor (list) 463, and besides either besides the route selection components 464 and the route selection validation criteria 465, or as part of the route selection validation criteria 465. According to the present invention, the user equipment route selection policy information 400, 401 might comprise either one user equipment route selection policy rule 460 or a plurality of user equipment route selection policy rules 460, 470, 480, 490. In any case, according to the present invention, the access mode-related validity element 441 (if applicable) is preferably part of the one (i.e. only) user equipment route selection policy rule 460 (of the user equipment route selection policy information 400, 401) or, in case of a plurality of user equipment route selection policy rules 460, 470, 480, 490 present (in the user equipment route selection policy information 400, 401), the access mode-related validity element 441 (if applicable) is part of one of these user equipment route selection policy rules 460, 470, 480, 490; alternatively, the access mode-related validity element 441 (if applicable) is part of more than one of these user equipment route selection policy rules 460, 470, 480, 490. Both in case of either one user equipment route selection policy rule being present as part of the user equipment route selection policy element 400, 401 or in case of more than one rule being present, the access mode-related validity element 441 (if it is present) is especially part of at least one route selection descriptor (list) 463, and/or besides a precedence value 461, a traffic descriptor 462 and at least one route selection descriptor (list) 463 of that user equipment route selection policy rule or rules 460, 470, 480, 490.
Besides the access mode-related validity element 441 (if applicable), the structure of the user equipment route selection policy information 400, 401 preferably corresponds to the definition as in the current version of 3GPP TS 23.503, i.e. it is or corresponds to a set of one or more URSP rules 460, 470, 480, 490, where the or each URSP rule 460, 470, 480, 490 generally comprises the three parts of a precedence value, a traffic descriptor, and one or more route selection descriptors.

Regarding the user equipment 20 represented in Figures 1 and 2, it is preferred according to the present invention (but not mandatorily the case) that standalone non-public networks (SNPNs) are accessible, e.g. according to the 5G radio access technology. The user equipment 20 comprises, for a given access technology for which standalone non-public networks are possible, the access mode configuration information 22 which relates to (or indicates) either a first network selection mode or a second network selection mode that the user equipment is alternatively able to use; in addition to the first and second network selection mode, further network selection modes are preferably (but not necessarily) possible, e.g. a third network selection mode, obtained from the combination of the available networks in the first and second network selection mode.
Typically, the user equipment 20 comprises a universal integrated circuit card or USIM (comprising user or subscriber credentials) and (if applicable) the access mode configuration information 22, the content of which defines or indicates whether the user equipment 20 is, at a considered point in time and regarding network selection, either in the SNPN mode (and, hence, exclusively or preferably accessing standalone non-public networks) or rather in the PLMN mode (normal mode) (and, hence, exclusively or preferably accessing public land mobile networks).
Especially according to the present invention, the user equipment route selection policy information 400, 401 comprises the access mode-related validity element 441 which is related to the content of the access mode configuration information 22 and either matches the access mode configuration information 22 or not.

It has been said that, according to the present invention, the user equipment 20 requests the user equipment route selection policy information by means of, in a first step, the user equipment 20 transmitting the user equipment route selection policy update request message 450 (to the telecommunications network 100), and, in a second step, a user equipment route selection policy information 401 (one that corresponds to the user equipment route selection policy update request message 450), is received by the user equipment 20.
According to all embodiments of the present invention, the user equipment route selection policy update request message 450 preferably corresponds to a control plane message, especially a non-access stratum message. Likewise, according to all embodiments of the present invention, it is furthermore preferred according to the present invention that the user equipment notifies, by means of the route selection policy update request message 450, the telecommunications network (especially the policy and charging function thereof) that a change of the connection conditions and/or of the operation situation occurred.

According to an embodiment of the present invention, it is preferred that the user equipment 20 sends the user equipment route selection policy update request message 450 as a generic update request (i.e. especially without specific parameters regarding its reason or without specific parameters); thereby, it is meant that the user equipment 20 requests the network (or the policy and charging function 130) to reevaluate the user equipment route selection policies (i.e. user equipment route selection policy rules or user equipment route selection policy information) assigned to the user equipment 20. Furthermore, according to another embodiment of the present invention, the user equipment 20 sends this user equipment route selection policy update request message 450 as a parametrized update request (equivalent to a request containing filtering parameters constraining/concretizing the scope of the requested URSP update): Hence, it is preferred according to the present invention that the user equipment route selection policy update request message 450 comprises an indication or an information relating to at least one of the following:
-- a reason or at least one reason for the user equipment route selection policy update request message 450,
-- a parameter or at least one parameter for the user equipment route selection policy update request message 450, especially a filtering parameter constraining the scope of the requested corresponding user equipment route selection policy information 401,
-- a change of the telecommunications network the user equipment 100 is attached to,
-- a change of an access mode configuration information of the user equipment 20, the access mode configuration information relating to a configuration or an operational mode of the user equipment 20 to be allowed to access either a predefined first set of telecommunications networks or a predefined second set of telecommunications networks,
-- a change related to the use or functionality of a software client application executed by or of the user equipment 20, especially corresponding to an application-triggered user equipment route selection policy update request message 450 (hence, this corresponds to an application-triggered URSP update request).

In conventionally known telecommunications networks, there are no known methods of triggering a user equipment to notify to the network that a network change happened so that the (home) network triggers the setting of (modified or updated) user equipment route selection policies. Hence, it cannot be implied that all network-related changes a UE performs are signaled to the network. Changes such as, e.g., operation mode change (SNPN mode switch on/off) are not signaled and may not result in an update of URSP rules. As a consequence, it may be necessary for a user equipment to deploy different URSPs to work properly (i.e. that application traffic gets routed via the appropriate path) depending on its network location. There is no way for a UE to query the network for URSPs based on a selection criterion.
Furthermore, in a conventionally known telecommunications network, user equipment route selection policies are not reusable objects; such user equipment route selection policies might be generated (by the respective core network (element)) and transmitted to the user equipment but are not reusable as they are not identifiable (able to be identified). Furthermore, in a conventionally known telecommunications network, in case the user equipment is in a roaming situation, currently only the H-PCF (i.e. the policy and charging function of the home network) sets user equipment route selection policies.

In contrast, according to the present invention, whenever a network connectivity happens (e.g. an operator change while in roaming), the user equipment 20 is able to notify the home network (e.g. the home public land mobile network) (telecommunications network 100) and trigger the home network to setup URSP rules tailored to the current connectivity (e.g. some operators may have an agreement to use special slices while in others that traffic may be routed normally). This allows for a more flexible interaction between the core network 120 (of the telecommunications network 100) and the user equipment 20 such that user equipment is even able to actively query and deploy route selection policies, e.g. if so requested by internal logic and/or application(s) of the user equipment 20 (i.e. software client applications of the user equipment 20 or executed by the user equipment 20).
Hence, according to the present invention, a user equipment-triggered/aided URSP deployment is provided by means of the user equipment notification trigger (i.e. the user equipment route selection policy update request message 450) containing trigger information, which is processed by the core network 120, especially a URSP generation function thereof, and the core network 120 / URSP generation function thereof then sets/removes user equipment route selection policies as required. Hence, from the implementation perspective, the user equipment route selection policy update request message 450 especially corresponds to a NAS level message notifying the PCF 130 (typically of the home network) that it should update URSP(s), optionally including reason(s) and/or other parameters the PCF should consider when deploying URSP(s), such reason(s) and/or other parameters including, e.g., the user equipment 20 being attached to a different network and/or the user equipment 20 operation mode changed, e.g. the user equipment 20 switched between PLMN mode and SNPN mode, and/or a change in subscription data.
Furthermore, it is preferred according to the present invention that the user equipment route selection policy update request message 450 is not necessarily addressed to or transmitted to the core network or policy and charging function of the home network of the user equipment 20: In a roaming situation of the user equipment 20 (i.e. while the user equipment 20 being connected to the home network via a visited network), the user equipment route selection policy update request message 450 might also be addressed and/or transmitted to the core network or policy and charging function of the visited network and/or (at least) the requested corresponding user equipment route selection policy information 401 might be received (at least partly) not only from the core network 120 or policy and charging function 130 of the home network 100 but from the core network or policy and charging function of the visited network. As such, changes triggered by the visited network (or V-PLMN) could trigger notifications towards the home policy and charging function (H-PCF) and vice-versa.

Figure 3, by means of a communication diagram between the user equipment 20 and the policy and charging function 130 of the telecommunications network 100, shows the user equipment 20 requesting the transmission of the user equipment route selection policy information 401 by means of a user equipment route selection policy update request message 450 to the telecommunications network.
As shown in Figure 3, in a fifth processing step 205, the user equipment 20 requests the user equipment route selection policy update (by means of the user equipment route selection policy update request message 450 being transmitted or sent to the policy and charging function 130), especially comprising information related to the reason and/or parameter information. In a sixth processing step 206, the user equipment 20 receives a request (from the policy and charging function 130, and the policy and charging function transmits this request) to list current user equipment route selection policy rules (i.e. rules currently applied by the user equipment 20). In a seventh processing step 207, the user equipment 20 transmits the requested user equipment route selection policy rules (or, more generally, the user equipment route selection policy information) requested by the policy and charging function 130 to the policy and charging function 130 (i.e. the policy and charging function receives these user equipment route selection policy rules / information). In an eighth processing step 208, the user equipment 20 receives the user equipment route selection policy information 401, i.e. corresponding to the user equipment route selection policy update request message 450 transmitted in the fifth processing step 205 (from the policy and charging function 130, and the policy and charging function transmits this user equipment route selection policy information 401).

In Figure 4, by means of a communication diagram between the user equipment 20, the policy and charging function 130 of the telecommunications network 100, and the application server 150, an embodiment is represented of the user equipment 20 requesting the transmission of the user equipment route selection policy information 401 by means of a user equipment route selection policy update request message 450 to the telecommunications network which is related to an application-triggered user equipment route selection policy update request or an application-based user equipment route selection policy setting:
According to the embodiment shown in Figure 4, in a tenth processing step 210, the user equipment 20 requests the user equipment route selection policy update (by means of the user equipment route selection policy update request message 450 being transmitted or sent to the policy and charging function 130), comprising pieces of information related to the respective application (in which respect the application-based user equipment route selection policy setting is to be performed) in the form of an application identifier (application ID corresponding, e.g., to a value of "X") and especially further parameter information. Hence, the user equipment route selection policy update request message 450 (or URSP update request) especially includes application-specific parameters (e.g. application credentials, an application identifier, access token, etc.), and the policy and charging function 130 generates (cf. a fifteenth processing step 215 below) a URSP (user equipment route selection policies) matching the specific parameters in the URSP update request.
In an eleventh processing step 211, the policy and charging function 130 queries the respective application parameters from the respective application server 150, and in a twelfth processing step 212, the application server 150 transmits the respective application parameters to the policy and charging function 130.
In a thirteenth processing step 213, the policy and charging function queries the user equipment route selection policies of the user equipment 20, i.e. the user equipment 20 especially receives a request (from the policy and charging function 130, and the policy and charging function transmits this request) to list current user equipment route selection policy rules (i.e. rules currently applied by the user equipment 20).
In a fourteenth processing step 214, the user equipment 20 transmits the requested user equipment route selection policy rules (or, more generally, the user equipment route selection policy information) requested by the policy and charging function 130 to the policy and charging function 130 (i.e. the policy and charging function receives these user equipment route selection policy rules / information).
In the fifteenth processing step 215, the policy and charging function 130 (or the user equipment route selection policy generation function as part of or accessible by the policy and charging function 130) generates the respective user equipment route selection policy ruleset to support the respective application (having application identifier, application ID, corresponding, e.g., to the value of "X"), especially also comprising application parameters and, if applicable, existing user equipment route selection policies. These application parameters (sent by the user equipment 20 in the tenth processing step 210) are able to be used by the URSP generator (or user equipment route selection policy generation function as part of or accessible by the policy and charging function 130, especially in 5G) to retrieve, e.g., quality-of-service parameters (e.g. from a SLA agreement (service level agreement) between the application provider and the network operator) and/or information related to a corresponding DNN (data network name) and/or information related to a corresponding network slice to be used for the given application. In this respect, parameters are able to be common for the application and/or the application is able to include user-specific parameters (application subscription, e.g. independent of the device subscription) resulting in a different DNN/ network slice based on the application subscription; the application-based subscription is able to be unknown to the network operator, i.e. rather in control of the application owner or application provider.
In a sixteenth processing step 216, the user equipment 20 receives the user equipment route selection policy information 401, i.e. corresponding to the (application-based) user equipment route selection policy update request message 450 transmitted in the tenth processing step 210 (from the policy and charging function 130, and the policy and charging function transmits this user equipment route selection policy information 401).

## Claims

1. Method for requesting and/or transmitting a user equipment route selection policy information (400) when operating a user equipment (20) connected to a telecommunications network (100), wherein the telecommunications network (100) comprises a core network (120) comprising a policy and charging function (130), wherein the policy and charging function (130) is configured to transmit user equipment route selection policy information (400) to the user equipment (20),
wherein a change of the operation situation of the user equipment (20) is detected or determined by the user equipment (20), wherein the change of the operation situation corresponds to the user equipment (20) being required to transmit data related to or regarding a software client application executed by the user equipment (20), wherein the software client application is associated with an application server entity (150),
wherein the method is **characterized by** the following steps:
-- the user equipment (20) transmits a user equipment route selection policy update request message (450) to the policy and charging function (130), wherein the user equipment route selection policy update request message (450) is triggered by the software client application executed by the user equipment (20) and comprises at least one application-related parameter, wherein the application-related parameter is an application identifier information related to the software client application,
-- subsequent to receiving the user equipment route selection policy update request message (450), the policy and charging function (130) requests the application server entity (150) to provide at least one further application-related parameter, and the application server entity provides the at least one further application-related parameter,
-- subsequent to receiving the user equipment route selection policy update request message (450), the policy and charging function (130) requests the user equipment (20) to provide the currently used user equipment route selection policy information (400) and the user equipment (20) provides the currently used user equipment route selection policy information (400),
-- subsequent to receiving the at least one further application-related parameter and the currently used user equipment route selection policy information (400), the policy and charging function (130) generates the user equipment route selection policy information (401) that corresponds to the user equipment route selection policy update request message (450) based on the at least one further application-related parameter and the currently used user equipment route selection policy information (400), and sends the user equipment route selection policy information (401) to the user equipment (20) to be deployed by the user equipment (20).

2. Method according to claim 1, wherein the user equipment route selection policy information (401) corresponding to the user equipment route selection policy update request message (450) corresponds to setting and/or removing a user equipment route selection policy regarding the user equipment, wherein in case of setting such a user equipment route selection policy regarding the user equipment (20), the corresponding user equipment route selection policy information (401) is generated by a user equipment route selection policy generation function as part of or accessible by the telecommunications network (100), especially as part of or accessible by the policy and charging function (130) thereof,
wherein especially the corresponding user equipment route selection policy information (401) is generated by the user equipment route selection policy generation function in a manner dependent on the change of the operation situation of the user equipment (20) and/or such that the user equipment route selection policy information (401) fits to the current operation situation of the user equipment (20).

3. Method according to one of the preceding claims, wherein the user equipment route selection policy update request message (450) corresponds to a control plane message, especially a non-access stratum message,
wherein especially by means of the user equipment route selection policy update request message (450) the user equipment (20) notifies the telecommunications network (100), especially the policy and charging function (130) thereof, that a change of the operation situation occurred.

4. Method according to one of the preceding claims, wherein the user equipment route selection policy information (401) corresponding to the user equipment route selection policy update request message (450) comprises a corresponding access mode-related validity element (441),
wherein especially the corresponding user equipment route selection policy information (401) comprises - besides a precedence value, a traffic descriptor and at least one route selection descriptor- the corresponding access mode-related validity element (441) and/or
wherein especially the corresponding user equipment route selection policy information (401) comprises the corresponding access mode-related validity element (441) as part of at least one route selection descriptor.

5. Method according to claim 4, wherein the user equipment route selection policy information (401) corresponding to the user equipment route selection policy update request message (450) comprises at least one user equipment route selection policy rule, wherein the corresponding access mode-related validity element (441) is part of the user equipment route selection policy rule, especially as part of at least one route selection descriptor, and/or besides a precedence value, a traffic descriptor and at least one route selection descriptor.

6. System for requesting and/or transmitting a user equipment route selection policy information (400) when operating the system with a connected user equipment (20), wherein the system comprises a telecommunications network (100) and the user equipment (20), wherein the telecommunications network (100) comprises a core network (120) comprising a policy and charging function (130), wherein the policy and charging function (130) is configured to transmit user equipment route selection policy information (400) to the user equipment (20), wherein the software client application is associated with an application server entity (150),
wherein the user equipment (20) is configured to detect or determine a change of the operation situation of the user equipment (20), wherein the change of the operation situation corresponds to the user equipment (20) being required to transmit data related to or regarding a software client application executed by the user equipment (20),
wherein the system is **characterized by** being configured such that:
-- the policy and charging function (130), receives, from the user equipment (20), a user equipment route selection policy update request message (450), wherein the user equipment route selection policy update request message (450) is triggered by the software client application executed by the user equipment (20) and comprises at least one application-related parameter, wherein the application-related parameter is an application identifier information related to the software client application,
-- subsequent to receiving the user equipment route selection policy update request message (450), the policy and charging function (130) requests the application server entity (150) to provide at least one further application-related parameter, and the application server entity provides the at least one further application-related parameter,
-- subsequent to receiving the user equipment route selection policy update request message (450), the policy and charging function (130) requests the user equipment (20) to provide the currently used user equipment route selection policy information (400) and the user equipment (20) provides the currently used user equipment route selection policy information (400),
-- subsequent to receiving the at least one further application-related parameter and the currently used user equipment route selection policy information (400),the policy and charging function (130) generates the user equipment route selection policy information (401) that corresponds to the user equipment route selection policy update request message (450) based on the at least one further application-related parameter and the currently used user equipment route selection policy information (400), and sends the user equipment route selection policy information (401) to the user equipment (20) to be deployed by the user equipment (20).

7. User equipment (20) configured to be used as the user equipment in the system according to claim 6.

8. Program comprising a computer readable program code which, when executed realizes the method according one of claims 1 to 5.

9. Computer-readable medium comprising instructions which when executed realizes the method according one of claims 1 to 5.

## Patentansprüche

1. Verfahren zum Anfordern und/oder Senden von Benutzerausrüstungs-Routenauswahlrichtlinieninformationen (400) beim Betreiben einer Benutzerausrüstung (20), die mit einem Telekommunikationsnetz (100) verbunden ist, wobei das Telekommunikationsnetz (100) ein Kernnetz (120) umfasst, das eine Richtlinien- und Gebührenberechnungsfunktion (130) umfasst, wobei die Richtlinien- und Gebührenberechnungsfunktion (130) dafür eingerichtet ist, die Benutzerausrüstungs-Routenauswahlrichtlinieninformationen (400) an die Benutzerausrüstung (20) zu senden,
wobei eine Änderung der Betriebssituation der Benutzerausrüstung (20) durch die Benutzerausrüstung (20) detektiert oder bestimmt wird, wobei die Änderung der Betriebssituation dem Umstand entspricht, dass die Benutzerausrüstung (20) aufgefordert wird, Daten zu senden, die sich auf eine durch die Benutzerausrüstung (20) ausgeführte Software-Client-Anwendung beziehen oder diese betreffen, wobei die Software-Client-Anwendung mit einer Anwendungsserverentität (150) verknüpft ist,
wobei das Verfahren durch die folgenden Schritte gekennzeichnet ist:
- die Benutzerausrüstung (20) sendet eine Benutzerausrüstungs-Routenauswahlrichtlinien-Aktualisierungsanforderungsnachricht (450) an die Richtlinien- und Gebührenberechnungsfunktion (130), wobei die Benutzerausrüstungs-Routenauswahlrichtlinien-Aktualisierungsanforderungsnachricht (450) durch die Software-Client-Anwendung ausgelöst wird, die durch die Benutzerausrüstung (20) ausgeführt wird, und mindestens einen anwendungsbezogenen Parameter umfasst, wobei der anwendungsbezogene Parameter eine Anwendungskennungsinformation ist, die sich auf die Software-Client-Anwendung bezieht,
- im Anschluss an das Empfangen der Benutzerausrüstungs-Routenauswahlrichtlinien-Aktualisierungsanforderungsnachricht (450) fordert die Richtlinien- und Gebührenberechnungsfunktion (130) die Anwendungsserverentität (150) auf, mindestens einen weiteren anwendungsbezogenen Parameter bereitzustellen, und die Anwendungsserverentität stellt den mindestens einen weiteren anwendungsbezogenen Parameter bereit,
- im Anschluss an das Empfangen der Benutzerausrüstungs-Routenauswahlrichtlinien-Aktualisierungsanforderungsnachricht (450) fordert die Richtlinien- und Gebührenberechnungsfunktion (130) die Benutzerausrüstung (20) auf, die momentan verwendeten Benutzerausrüstungs-Routenauswahlrichtlinieninformationen (400) bereitzustellen, und die Benutzerausrüstung (20) stellt die momentan verwendeten Benutzerausrüstungs-Routenauswahlrichtlinieninformationen (400) bereit,
- im Anschluss an das Empfangen des mindestens einen weiteren anwendungsbezogenen Parameters und der momentan verwendeten Benutzerausrüstungs-Routenauswahlrichtlinieninformationen (400) generiert die Richtlinien- und Gebührenberechnungsfunktion (130) die Benutzerausrüstungs-Routenauswahlrichtlinieninformationen (401), die der Benutzerausrüstungs-Routenauswahlrichtlinien-Aktualisierungsanforderungsnachricht (450) entsprechen, auf der Grundlage des mindestens einen weiteren anwendungsbezogenen Parameters und der momentan verwendeten Benutzerausrüstungs-Routenauswahlrichtlinieninformationen (400), und sendet die Benutzerausrüstungs-Routenauswahlrichtlinieninformationen (401) an die Benutzerausrüstung (20), um durch die Benutzerausrüstung (20) angewendet zu werden.

2. Verfahren nach Anspruch 1, wobei die Benutzerausrüstungs-Routenauswahlrichtlinieninformationen (401), die der Benutzerausrüstungs-Routenauswahlrichtlinien-Aktualisierungsanforderungsnachricht (450) entsprechen, dem Einstellen und/oder Entfernen einer Benutzerausrüstungs-Routenauswahlrichtlinie in Bezug auf die Benutzerausrüstung entsprechen, wobei im Fall des Einstellens einer solchen Benutzerausrüstungs-Routenauswahlrichtlinie in Bezug auf die Benutzerausrüstung (20) die entsprechenden Benutzerausrüstungs-Routenauswahlrichtlinieninformationen (401) durch eine Benutzerausrüstungs-Routenauswahlrichtliniengenerierungsfunktion generiert wird, die Teil des Telekommunikationsnetzes (100) oder für dieses zugänglich ist und insbesondere Teil von dessen Richtlinien- und Gebührenberechnungsfunktion (130) oder für diese zugänglich ist,
wobei insbesondere die entsprechenden Benutzerausrüstungs-Routenauswahlrichtlinieninformationen (401) durch die Benutzerausrüstungs-Routenauswahlrichtliniengenerierungsfunktion in einer Weise generiert wird, die von der Änderung der Betriebssituation der Benutzerausrüstung (20) abhängig ist, und/oder in einer solchen Weise, dass die Benutzerausrüstungs-Routenauswahlrichtlinieninformationen (401) zu der momentanen Betriebssituation der Benutzerausrüstung (20) passen.

3. Verfahren nach einem der vorangehenden Ansprüche, wobei die Benutzerausrüstungs-Routenauswahlrichtlinien-Aktualisierungsanforderungsnachricht (450) einer Steuerungsebenennachricht, insbesondere einer Nicht-Zugriffsschicht-Nachricht, entspricht,
wobei insbesondere die Benutzerausrüstung (20) mittels der Benutzerausrüstungs-Routenauswahlrichtlinien-Aktualisierungsanforderungsnachricht (450) das Telekommunikationsnetz (100), insbesondere dessen Richtlinien- und Gebührenberechnungsfunktion (130), darüber informiert, dass eine Änderung der Betriebssituation eingetreten ist.

4. Verfahren nach einem der vorangehenden Ansprüche, wobei die Benutzerausrüstungs-Routenauswahlrichtlinieninformationen (401), die der Benutzerausrüstungs-Routenauswahlrichtlinien-Aktualisierungsanforderungsnachricht (450) entsprechen, ein entsprechendes zugangsmodusbezogenes Gültigkeitselement (441) umfassen,
wobei insbesondere die entsprechenden Benutzerausrüstungs-Routenauswahlrichtlinieninformationen (401) neben einem Rangfolgewert, einem Verkehrsdeskriptor und mindestens einem Routenwahldeskriptor auch das entsprechende zugangsmodusbezogene Gültigkeitselement (441) umfassen, und/oder
wobei insbesondere die entsprechenden Benutzerausrüstungs-Routenauswahlrichtlinieninformationen (401) das entsprechende zugangsmodusbezogene Gültigkeitselement (441) als Teil mindestens eines Routenauswahldeskriptors umfassen.

5. Verfahren nach Anspruch 4, wobei die Benutzerausrüstungs-Routenauswahlrichtlinieninformationen (401), die der Benutzerausrüstungs-Routenauswahlrichtlinien-Aktualisierungsanforderungsnachricht (450) entsprechen, mindestens eine Benutzerausrüstungs-Routenauswahlrichtlinienregel umfassen, wobei das spezifische zugangsmodusbezogene Gültigkeitselement (441) Teil der Benutzerausrüstungs-Routenauswahlrichtlinienregel ist, insbesondere als Teil mindestens eines Routenauswahldeskriptors, und/oder neben einem Rangfolgewert, einem Verkehrsdeskriptor und mindestens einem Routenauswahldeskriptor.

6. System zum Anfordern und/oder Senden von Benutzerausrüstungs-Routenauswahlrichtlinieninformationen (400), wenn das System mit einer verbundenen Benutzerausrüstung (20) betrieben wird, wobei das System ein Telekommunikationsnetz (100) und die Benutzerausrüstung (20) umfasst, wobei das Telekommunikationsnetz (100) ein Kernnetz (120) umfasst, das eine Richtlinien- und Gebührenberechnungsfunktion (130) umfasst, wobei die Richtlinien- und Gebührenberechnungsfunktion (130) dafür eingerichtet ist, Benutzerausrüstungs-Routenauswahlrichtlinieninformationen (400) an die Benutzerausrüstung (20) zu senden, wobei die Software-Client-Anwendung mit einer Anwendungsserverentität (150) verknüpft ist,
wobei die Benutzerausrüstung (20) dafür eingerichtet ist,
eine Änderung der Betriebssituation der Benutzerausrüstung (20) zu detektieren oder zu bestimmen, wobei die Änderung der Betriebssituation dem Umstand entspricht, dass die Benutzerausrüstung (20) aufgefordert wird, Daten zu senden, die sich auf eine durch die Benutzerausrüstung (20) ausgeführte Software-Client-Anwendung beziehen oder diese betreffen,
wobei das System **dadurch gekennzeichnet ist, dass** es so eingerichtet ist, dass:
- die Richtlinien- und Gebührenberechnungsfunktion (130) von der Benutzerausrüstung (20) eine Benutzerausrüstungs-Routenauswahlrichtlinien-Aktualisierungsanforderungsnachricht (450) empfängt, wobei die Benutzerausrüstungs-Routenauswahlrichtlinien-Aktualisierungsanforderungsnachricht (450) durch die Software-Client-Anwendung ausgelöst wird, die durch die Benutzerausrüstung (20) ausgeführt wird, und mindestens einen anwendungsbezogenen Parameter umfasst, wobei der anwendungsbezogene Parameter eine Anwendungskennungsinformation ist, die sich auf die Software-Client-Anwendung bezieht,
- im Anschluss an das Empfangen der Benutzerausrüstungs-Routenauswahlrichtlinien-Aktualisierungsanforderungsnachricht (450) die Richtlinien- und Gebührenberechnungsfunktion (130) die Anwendungsserverentität (150) auffordert, mindestens einen weiteren anwendungsbezogenen Parameter bereitzustellen, und die Anwendungsserverentität den mindestens einen weiteren anwendungsbezogenen Parameter bereitstellt,
- im Anschluss an das Empfangen der Benutzerausrüstungs-Routenauswahlrichtlinien-Aktualisierungsanforderungsnachricht (450) die Richtlinien- und Gebührenberechnungsfunktion (130) die Benutzerausrüstung (20) auffordert, die momentan verwendeten Benutzerausrüstungs-Routenauswahlrichtlinieninformationen (400) bereitzustellen, und die Benutzerausrüstung (20) die momentan verwendeten Benutzerausrüstungs-Routenauswahlrichtlinieninformationen (400) bereitstellt,
- im Anschluss an das Empfangen des mindestens einen weiteren anwendungsbezogenen Parameters und der momentan verwendeten Benutzerausrüstungs-Routenauswahlrichtlinieninformationen (400) die Richtlinien- und Gebührenberechnungsfunktion (130) die Benutzerausrüstungs-Routenauswahlrichtlinieninformationen (401) generiert, die der Benutzerausrüstungs-Routenauswahlrichtlinien-Aktualisierungsanforderungsnachricht (450) entsprechen, auf der Grundlage des mindestens einen weiteren anwendungsbezogenen Parameters und der momentan verwendeten Benutzerausrüstungs-Routenauswahlrichtlinieninformationen (400), und die Benutzerausrüstungs-Routenauswahlrichtlinieninformationen (401) an die Benutzerausrüstung (20) sendet, um durch die Benutzerausrüstung (20) angewendet zu werden.

7. Benutzerausrüstung (20), dafür eingerichtet, als die Benutzerausrüstung in dem System nach Anspruch 6 verwendet zu werden.

8. Programm, umfassend einen computerlesbaren Programmcode, der, wenn er ausgeführt wird, das Verfahren nach einem der Ansprüche 1 bis 5 realisiert.

9. Computerlesbares Medium, umfassend Instruktionen, die, wenn sie ausgeführt werden, das Verfahren nach einem der Ansprüche 1 bis 5 realisieren.

## Revendications

1. Procédé permettant de demander et/ou de transmettre des informations de politique de sélection de route d'équipement utilisateur (400) lors de l'utilisation d'un équipement utilisateur (20) connecté à un réseau de télécommunications (100), dans lequel le réseau de télécommunications (100) comprend un réseau central (120) comprenant une fonction de politique et de facturation (130), dans lequel la fonction de politique et de facturation (130) est configurée pour transmettre des informations de politique de sélection de route d'équipement utilisateur (400) à l'équipement utilisateur (20),
dans lequel un changement de la situation de fonctionnement de l'équipement utilisateur (20) est détecté ou déterminé par l'équipement utilisateur (20), dans lequel le changement de la situation de fonctionnement correspond au fait que l'équipement utilisateur (20) doit transmettre des données liées à ou concernant une application client logicielle exécutée par l'équipement utilisateur (20), dans lequel l'application client logicielle est associée à une entité serveur d'applications (150),
dans lequel le procédé est **caractérisé par** les étapes suivantes :
- l'équipement utilisateur (20) transmet un message de demande de mise à jour de politique de sélection de route d'équipement utilisateur (450) à la fonction de politique et de facturation (130), dans lequel le message de demande de mise à jour de politique de sélection de route d'équipement utilisateur (450) est déclenché par l'application client logicielle exécutée par l'équipement utilisateur (20) et comprend au moins un paramètre lié à l'application, dans lequel le paramètre lié à l'application est une information d'identificateur d'application liée à l'application client logicielle,
- après avoir reçu le message de demande de mise à jour de politique de sélection de route d'équipement utilisateur (450), la fonction de politique et de facturation (130) demande à l'entité de serveur d'applications (150) de fournir au moins un autre paramètre lié à l'application, et l'entité de serveur d'applications (150) fournit l'au moins un autre paramètre lié à l'application,
- après avoir reçu le message de demande de mise à jour de politique de sélection de route d'équipement utilisateur (450), la fonction de politique et de facturation (130) demande à l'équipement utilisateur (20) de fournir les informations de politique de sélection de route d'équipement utilisateur actuellement utilisées (400) et l'équipement utilisateur (20) fournit les informations de politique de sélection de route d'équipement utilisateur actuellement utilisées (400),
- après avoir reçu l'au moins un autre paramètre lié à l'application et les informations de politique de sélection de route d'équipement utilisateur actuellement utilisées (400), la fonction de politique et de facturation (130) génère les informations de politique de sélection de route d'équipement utilisateur (401) qui correspondent au message de demande de mise à jour de politique de sélection de route d'équipement utilisateur (450) sur la base de l'au moins un autre paramètre lié à l'application et des informations de politique de sélection de route d'équipement utilisateur actuellement utilisées (400), et envoie les informations de politique de sélection de route d'équipement utilisateur (401) à l'équipement utilisateur (20) pour être déployées par l'équipement utilisateur (20).

2. Procédé selon la revendication 1, dans lequel les informations de politique de sélection de route d'équipement utilisateur (401) correspondant au message de demande de mise à jour de politique de sélection de route d'équipement utilisateur (450) correspondent à l'établissement et/ou à la suppression d'une politique de sélection de route d'équipement utilisateur concernant l'équipement utilisateur, dans lequel en cas d'établissement d'une telle politique de sélection de route d'équipement utilisateur concernant l'équipement utilisateur (20), les informations de politique de sélection de route d'équipement utilisateur correspondantes (401) sont générées par une fonction de génération de politique de sélection de route d'équipement utilisateur dans le cadre de ou accessible par le réseau de télécommunications (100), en particulier dans le cadre de ou accessible par la fonction de politique et de facturation (130) de celui-ci,
dans lequel en particulier les informations de politique de sélection de route d'équipement utilisateur correspondantes (401) sont générées par la fonction de génération de politique de sélection de route d'équipement utilisateur d'une manière dépendant du changement de la situation de fonctionnement de l'équipement utilisateur (20) et/ou de telle sorte que les informations de politique de sélection de route d'équipement utilisateur (401) soient adaptées à la situation de fonctionnement actuelle de l'équipement utilisateur (20).

3. Procédé selon l'une des revendications précédentes, dans lequel le message de demande de mise à jour de politique de sélection de route d'équipement utilisateur (450) correspond à un message de plan de commande, en particulier un message de strate de non-accès,
dans lequel, en particulier au moyen du message de demande de mise à jour de politique de sélection de route d'équipement utilisateur (450), l'équipement utilisateur (20) notifie au réseau de télécommunications (100), en particulier à sa fonction de politique et de facturation (130), qu'un changement de la situation de fonctionnement s'est produit .

4. Procédé selon l'une des revendications précédentes, dans lequel les informations de politique de sélection de route d'équipement utilisateur (401) correspondant au message de demande de mise à jour de politique de sélection de route d'équipement utilisateur (450) comprennent un élément de validité lié au mode d'accès correspondant (441),
dans lequel en particulier les informations de politique de sélection de route d'équipement utilisateur correspondantes (401) comprennent - outre une valeur de priorité, un descripteur de trafic et au moins un descripteur de sélection de route - l'élément de validité lié au mode d'accès correspondant (441) et/ou
en particulier, les informations de politique de sélection de route d'équipement utilisateur correspondantes (401) comprennent l'élément de validité lié au mode d'accès correspondant (441) en tant que partie d'au moins un descripteur de sélection de route.

5. Procédé selon la revendication 4, dans lequel les informations de politique de sélection de route d'équipement utilisateur (401) correspondant au message de demande de mise à jour de politique de sélection de route d'équipement utilisateur (450) comprennent au moins une règle de politique de sélection de route d'équipement utilisateur, dans lequel l'élément de validité lié au mode d'accès correspondant (441) fait partie de la règle de politique de sélection de route d'équipement utilisateur, en particulier en tant que partie d'au moins un descripteur de sélection de route, et/ou en plus d'une valeur de priorité, d'un descripteur de trafic et d'au moins un descripteur de sélection de route.

6. Système permettant de demander et/ou de transmettre des informations de politique de sélection de route d'équipement utilisateur (400) lors du fonctionnement du système avec un équipement utilisateur connecté (20), dans lequel le système comprend un réseau de télécommunications (100) et l'équipement utilisateur (20), dans lequel le réseau de télécommunications (100) comprend un réseau central (120) comprenant une fonction de politique et de facturation (130), dans lequel la fonction de politique et de facturation (130) est configurée pour transmettre des informations de politique de sélection de route d'équipement utilisateur (400) à l'équipement utilisateur (20), dans lequel l'application client logicielle est associée à une entité serveur d'applications (150),
dans lequel l'équipement utilisateur (20) est configuré pour détecter ou déterminer un changement de la situation de fonctionnement de l'équipement utilisateur (20), dans lequel le changement de la situation de fonctionnement correspond au fait que l'équipement utilisateur (20) doit transmettre des données liées à ou concernant une application client logicielle exécutée par l'équipement utilisateur (20),
dans lequel le système est **caractérisé par** ce qu'il est configuré de telle sorte que :
- la fonction de politique et de facturation (130) reçoit, à partir de l'équipement utilisateur (20), un message de demande de mise à jour de politique de sélection de route d'équipement utilisateur (450), dans lequel le message de demande de mise à jour de politique de sélection de route d'équipement utilisateur (450) est déclenché par l'application client logicielle exécutée par l'équipement utilisateur (20) et comprend au moins un paramètre lié à l'application, dans lequel le paramètre lié à l'application est une information d'identificateur d'application lié à l'application client logicielle,
- après avoir reçu le message de demande de mise à jour de politique de sélection de route d'équipement utilisateur (450), la fonction de politique et de facturation (130) demande à l'entité de serveur d'applications (150) de fournir au moins un autre paramètre lié à l'application, et l'entité de serveur d'applications (150) fournit l'au moins un autre paramètre lié à l'application,
- après avoir reçu le message de demande de mise à jour de politique de sélection de route d'équipement utilisateur (450), la fonction de politique et de facturation (130) demande à l'équipement utilisateur (20) de fournir les informations de politique de sélection de route d'équipement utilisateur actuellement utilisées (400) et l'équipement utilisateur (20) fournit les informations de politique de sélection de route d'équipement utilisateur actuellement utilisées (400),
- après avoir reçu l'au moins un autre paramètre lié à l'application et les informations de politique de sélection de route d'équipement utilisateur actuellement utilisées (400), la fonction de politique et de facturation (130) génère les informations de politique de sélection de route d'équipement utilisateur (401) qui correspondent au message de demande de mise à jour de politique de sélection de route d'équipement utilisateur (450) sur la base de l'au moins un autre paramètre lié à l'application et des informations de politique de sélection de route d'équipement utilisateur actuellement utilisées (400), et envoie les informations de politique de sélection de route d'équipement utilisateur (401) à l'équipement utilisateur (20) pour être déployées par l'équipement utilisateur (20).

7. Équipement utilisateur (20) configuré pour être utilisé comme équipement utilisateur dans le système selon la revendication 6.

8. Programme comprenant un code de programme lisible par ordinateur qui, lorsqu'il est exécuté, réalise le procédé selon l'une des revendications 1 à 5.

9. Support lisible par ordinateur comprenant des instructions qui, lorsqu'elles sont exécutées, mettent en œuvre le procédé selon l'une des revendications 1 à 5.
